# EUROPEAN PATENT SPECIFICATION

(11) **EP 4 524 407 B1**
(45) Date of publication and mention of the grant of the patent: **29.10.2025**
(21) Application number: 23197431.2
(22) Date of filing: 14.09.2023
(51) Int. Cl.: F16B 19/10, F16B 21/16

(54) **A BALL LOCK PIN WITH FAIL-SAFE LOCKING MECHANISM**
KUGELSPERRBOLZEN MIT AUSFALLSICHEREM VERRIEGELUNGSMECHANISMUS
GOUPILLE DE VERROUILLAGE À BILLES AVEC MÉCANISME DE VERROUILLAGE À SÉCURITÉ INTÉGRÉE

(43) Date of publication of application: 19.03.2025
(73) Proprietor: AIRBUS HELICOPTERS DEUTSCHLAND GmbH, 86609 Donauwörth (DE)
(72) Inventor: HOMMEL, Johannes, 89437 HAUNSHEIM (DE); GOERLICH, Stefan, 86609 DONAUWÖRTH (DE); SCHMEDLER, Fabian, 86609 DONAUWÖRTH (AT)
(74) Representative: GPI Brevets

(56) References cited:
- EP-B1- 2 801 726
- DE-B- 1 164 755
- FR-A- 1 254 897
- US-A- 5 590 900

## Description

The present invention relates to a ball lock pin comprising a pin body, a blocking pin that is movably arranged in the pin body, at least one locking ball that may be biased into a locking position by the blocking pin, and a spring element that biases the blocking pin into a blocking position for biasing the at least one locking ball into the locking position. The present invention further relates to an aircraft comprising such a ball lock pin.

Conventional ball lock pins usually include a pin body, or outer pin, with a borehole drilled in length direction through the entire outer pin. This borehole is required for accommodation of an inner blocking pin, or lock pin, which is provided for biasing associated locking balls, or lock balls, into designated positions.

More specifically, in an unactuated state, which corresponds to a locked state of such a conventional ball lock pin, the lock pin is usually pressed against a closure cap by means of a compression spring and, thus, biases the associated lock balls into a locking position. In contrast thereto, in an actuated state the lock pin is usually pressed against the biasing force of the compression spring into the outer pin and, thus, releases the associated lock balls from their locking position.

By way of example, such a conventional ball lock pin is described in the documents US 5 590 900 A, DE 20 2019 106 030 U1, EP 3 599 385 A1, US 2007/0001408 A1, US 2012/0051835 A1, US 2017/0211607 A1, US 2019/0314958 A1, and WO 2017/127773 A1.

However, such a conventional ball lock pin does not comply with the certification specifications (CS) for helicopters from the European Aviation Safety Agency (EASA), i.e. CS-27.607 and CS-29.607, which require for any removable bolt, screw, nut, pin, or other fastener whose loss could jeopardize safe operation of a given rotorcraft the incorporation of two separate locking devices. Nevertheless, the conventional ball lock pin described above does not fulfil the requirement of these certification specifications.

More specifically, the design of the conventional ball lock pin has two major flaws regarding the above-mentioned certification specifications: A first problem consists in a possible failure of the compression spring. If this happens, the lock balls are no longer properly pressed into their locking position and the ball lock pin as a whole is no longer secured in its length direction and is, therefore, unable to perform its intended function. A second problem occurs if the lock pin breaks. In this case, a fragment of the lock pin might potentially fall out through the opening in the bottom part of the outer pin, thus, leading again to the problem that the ball lock pin is no longer secured in its length direction. In both cases, failure and loss of the ball lock pin may occur and lead to Foreign Object Damage (FOD).

One solution for avoiding possibly resulting hazardous situations consists in replacing the conventional ball lock pin with a screw connection with a castellated nut and a split or cotter pin. Another solution consists in providing the conventional ball lock pin with a securing splint, such as a Fokker needle.

Other ball lock fastener devices are described in the documents CH 310 313, DE 20 2009 009 338 U1, DE 20 2012 001 808 U1, EP 0 379 282 A2, EP 0 838 600 A1, EP 1 707 826 A2, EP 2 137 417 A1, EP 2 751 434 A1, EP 2 801 726 A1, EP 2 971 404 A1, US 2002/0067045 A1, US 2006/0233602 A1, US 2014/0030011 A1, US 2014/0375020 A1, US 2018/0058490 A1, US 1,923,025, US 2,779,228, US 2,816,471, US 2,968,205, US 3,068,737, US 3,085,462, US 3,180,390, US 3,596,554, and US 6,193,261 B1.

It is an object of the present invention to provide a new ball lock pin with an improved fail-safe locking mechanism. This object is solved by a ball lock pin comprising the features of claim 1.

More specifically, a ball lock pin is provided which comprises a pin body, a blocking pin, at least one locking ball, a primary spring element, and a redundant spring element. The pin body has a length axis and comprises an inner accommodation and at least one locking ball accommodation. The blocking pin is at least partly arranged in the inner accommodation and movable along the length axis between a blocking position and a releasing position. The at least one locking ball is movably arranged in the at least one locking ball accommodation. More particularly, the at least one locking ball is biased into a locking position by the blocking pin if the blocking pin is in the blocking position and the at least one locking ball is released for moving into an unlocking position if the blocking pin is in the releasing position. The primary spring element is arranged in the inner accommodation and biases the blocking pin into the blocking position. The redundant spring element is arranged in the inner accommodation and biases the blocking pin into the blocking position.

Advantageously, the inventive ball lock pin is easier to install and/or replace than e. g. a screw connection with a castellated nut and a split or cotter pin, or a conventional ball lock pin with an additional securing splint, such as a Fokker needle. Furthermore, the inventive ball lock pin complies with the EASA certification specifications CS-25.607, CS-27.607, and CS-29.607 concerning double locking for removable fasteners. In particular, the inventive ball lock pin has a fail-safe double locking mechanism provided by means of the redundant spring element that guarantees locking of the ball lock pin in case of a failure of the primary spring element. Likewise, in case of a failure of the blocking pin inside the pin body, the at least one locking ball is still biased into the locking position as the blocking pin is still biased into its blocking position by the redundant spring element. Moreover, the inventive ball lock pin may be provided with a securing feature that prevents unintentional unlocking or unlocking may only be possible by use of a dedicated unlocking tool, as described below.

In general, the inventive ball lock pin is secured in direction of its length axis in a given component, such as e. g. a hinge, by means of the at least one locking ball which is embedded in the pin body. By moving the blocking pin into its releasing position, the at least one locking ball may retract into its unlocking position such that the ball lock pin may be inserted into the given component. By subsequently moving the blocking pin into its blocking position, the at least one locking ball is pushed into its locking position and, thus, locks the ball lock pin in the given component.

However, in order to prevent failure of the inventive ball lock pin, the latter is provided with a double locking feature. The basic component of this double locking feature is the redundant spring element that guarantees locking of the ball lock pin in case of a failure of the primary spring element. In other words, the inventive ball lock pin is equipped with two independent spring elements in order to realize the double locking feature: the primary spring element and the redundant spring element. A respective axial securing/locking of the inventive ball lock pin, i.e. a securing/locking in the direction of its length axis, is ensured by the at least one locking ball.

Advantageously, the inventive ball lock pin is provided with two or more locking balls which may form one or more locking level(s). Furthermore, a closure cap may be provided.

In an illustrative configuration, the closure cap and the blocking pin may comprise corresponding geometries or shapes such that unintentional actuation of the blocking pin is at least rendered more difficult or in the best case even prevented. In this configuration, the inventive ball lock pin may either be equipped with two or more locking balls forming a single locking level, or two or more locking levels.

In another illustrative configuration, the inventive ball lock pin is equipped with an inner and an outer blocking pin, which advantageously provides for further redundancy. Again, the inventive ball lock pin may either be equipped with two or more locking balls forming a single locking level, or two or more locking levels. In this configuration, the closure cap and the inner and outer blocking pins may be shaped such that a dedicated special-shaped actuation tool is required to unlock the ball lock pin. Thus, unintentional unlocking is advantageously prevented.

By way of example, the blocking pin(s) and the primary and redundant spring elements are assembled to form a push mechanism. However, a pull mechanism may likewise be realized.

In some embodiments, the pin body comprises an enlarged cup-shaped end section, and the primary spring element is arranged in the enlarged cup-shaped end section, in particular between the blocking pin and the enlarged cup-shaped end section.

In some embodiments, the ball lock pin further comprises a closure cap that closes the enlarged cup-shaped end section. The closure cap comprises an opening, and the blocking pin comprises an actuatable end section that extends through the opening.

Preferably, the blocking pin comprises a collar that delimits the actuatable end section on the blocking pin, and the primary spring element biases the collar in the blocking position of the blocking pin against the closure cap.

Preferably, the blocking pin comprises at least one notch for reception of the at least one locking ball in the releasing position of the blocking pin, and the at least one notch and the collar are arranged on opposed axial ends of the blocking pin.

Preferably, the redundant spring element abuts against the blocking pin close to the at least one notch.

In some embodiments, the ball lock pin further comprises at least one additional blocking pin.

Preferably, the blocking pin is tube-shaped and comprises an inner through hole, and the at least one additional blocking pin is at least partly accommodated in the inner through hole.

Preferably, the at least one additional blocking pin comprises a collar that abuts against the blocking pin.

Preferably, the redundant spring element biases the collar of the at least one additional blocking pin against the blocking pin.

The ball lock pin may comprise at least one additional locking ball, and the pin body may comprise at least one additional locking ball accommodation, wherein the at least one additional locking ball is movably arranged in the at least one additional locking ball accommodation. Preferably, the at least one additional locking ball is biased into an associated locking position by the additional blocking pin if the at least one additional blocking pin is in an associated blocking position, and the at least one additional locking ball is released for moving into an associated unlocking position if the at least one additional blocking pin is in an associated releasing position. The at least one locking ball and the at least one additional locking ball may form separate locking levels.

The blocking pin and the at least one additional blocking pin may be simultaneously actuatable via an associated actuation tool.

In some embodiments, the blocking pin is rotatable about the length axis and comprises at least one lateral flange that is at least lockable in one first angular position or one second angular position.

Preferably, the blocking pin is in the releasing position if the blocking pin is locked in the second angular position.

According to one aspect of the present invention, an aircraft may comprise the ball lock pin described above.

Preferred embodiments of the present invention are outlined by way of example in the following description with reference to the attached drawings. In these attached drawings, identical or identically functioning components and elements are labeled with identical reference numbers and characters and are, consequently, only described once in the following description.
- Figure 1 shows a side view of an illustrative aircraft with hinges which are equipped with ball lock pins according to the present invention,
- Figure 2 shows perspective views of a ball lock pin according to a first embodiment,
- Figure 3 shows cut views of the ball lock pin of Figure 2,
- Figure 4 shows perspective views of a ball lock pin according to a second embodiment,
- Figure 5 shows cut views of the ball lock pin of Figure 4,
- Figure 6 shows perspective views of a ball lock pin according to a third embodiment,
- Figure 7 shows cut views of the ball lock pin of Figure 6,
- Figure 8 shows perspective views of a ball lock pin according to a fourth embodiment,
- Figure 9 shows cut views of the ball lock pin of Figure 8,
- Figure 10 shows a perspective view and cut views of a ball lock pin according to a fifth embodiment,
- Figure 11 shows a perspective view of one of the hinges of Figure 1 with the ball lock pin of Figure 2,
- Figure 12 shows a cut view of the hinge of Figure 11 with the ball lock pin of Figure 11 in actuated state, and
- Figure 13 shows a cut view of the hinge of Figure 11 with the ball lock pin of Figure 11 in unactuated state.

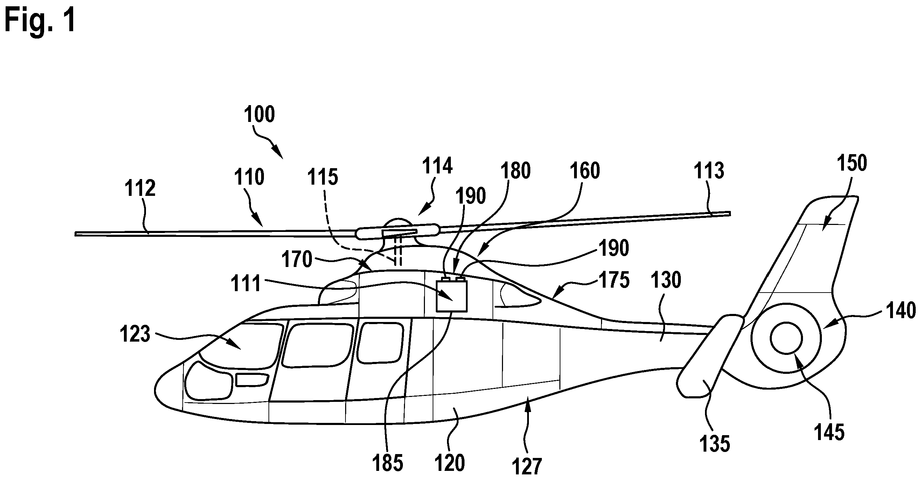

Figure 1 shows an aircraft 100 that is illustratively embodied as a rotorcraft and, more particularly, as a helicopter. Thus, for purposes of simplicity and clarity, the aircraft 100 is hereinafter referred to as the "helicopter 100". However, it should be noted that application of the present invention is not limited to helicopters. Instead, the present invention may be applied in the complete field of aeronautics, i.e. in any aircrafts or even rockets, and, more generally, in the complete field of engineering.

Illustratively, the helicopter 100 comprises at least one rotor system 110 that may be embodied as a multi-blade rotor system for providing lift and forward or backward thrust during operation. The at least one rotor system 110 comprises a plurality of rotor blades 112, 113 and may be powered by at least one engine 111. By way of example, the plurality of rotor blades 112, 113 are mounted at an associated rotor head 114 to a rotor shaft 115, which rotates in operation of the helicopter 100 around an associated rotation axis.

The helicopter 100 illustratively further comprises a fuselage 120 that forms an airframe of the helicopter 100. The fuselage 120 may be connected to a suitable landing gear and illustratively forms a cabin 123 and a rear fuselage 127. The rear fuselage 127 may be connected to a tail boom 130.

The tail boom 130 may be provided with at least one counter-torque device 140 configured to provide counter-torque during operation, i.e. to counter the torque created by rotation of the plurality of rotor blades 112, 113 around the rotor shaft 115, for purposes of balancing the helicopter 100 in terms of yaw. If desired, the counter-torque device 140 may be shrouded.

Illustratively, the at least one counter-torque device 140 is provided at an aft section of the tail boom 130 and may have a tail rotor 145. The aft section of the tail boom 130 may include a fin 150. Furthermore, the tail boom 130 may be provided with a suitable horizontal stabilizer 135.

Moreover, the helicopter 100 may comprise a carrier element 160 which may at least cover the at least one engine 111 of the helicopter 100. If desired, the carrier element 160 may further cover a transmission system of the helicopter 100, which may include a gear box, and/or a crest of the helicopter 100. More specifically, the carrier element 160 may be embodied as a cowling of the helicopter 100 and is, therefore, referred to hereinafter as the "cowling 160", for simplicity and clarity. Illustratively, the cowling 160 includes a transmission cowling 170 that covers a transmission system of the helicopter 100, a crest cowling 175 that covers a crest of the helicopter 100, and an engine cowling 180 that covers the at least one engine 111 of the helicopter 100.

By way of example, the engine cowling 180 is provided with a cowling access door 185 for providing access to the at least one engine 111. Likewise, the transmission cowling 170 and the crest cowling 175 may also be provided with suitable cowling access doors.

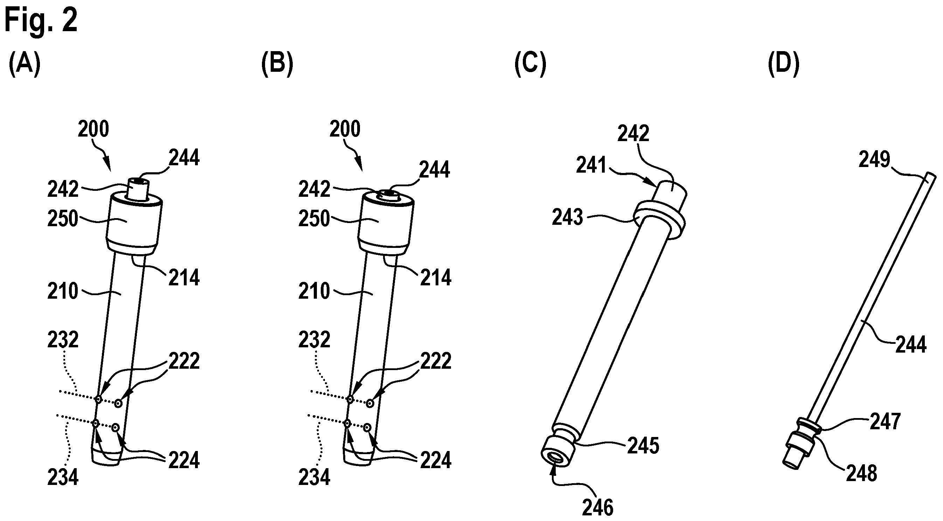

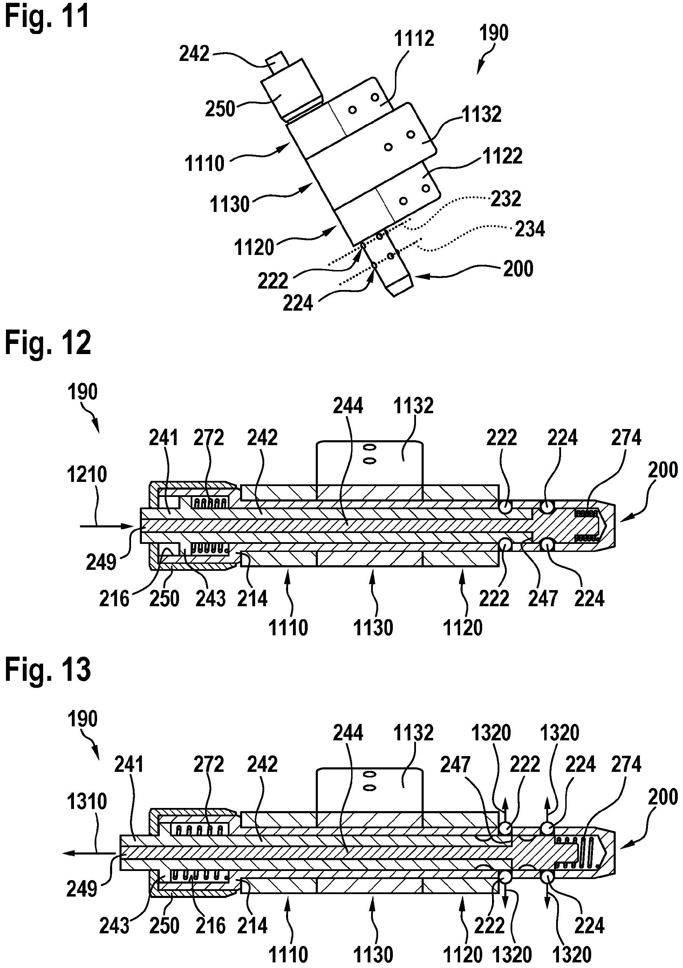

The cowling access door 185 is preferably pivotally mounted to the engine cowling 180 via suitable hinges 190 for being pivotable between a closed position and an open position. One or more of the hinges 190 may be provided with a ball lock pin according to the present invention, as described below at Figure 11 to Figure 13. Illustrative ball lock pins are described hereinafter with reference to Figure 2 to Figure 10.

Figure 2 shows in parts (A) to (D) a ball lock pin 200 and components thereof according to a first embodiment. The ball lock pin 200 comprises a pin body 210, a blocking pin 242, an additional blocking pin 244, at least one locking ball 222, and at least one additional locking ball 224.

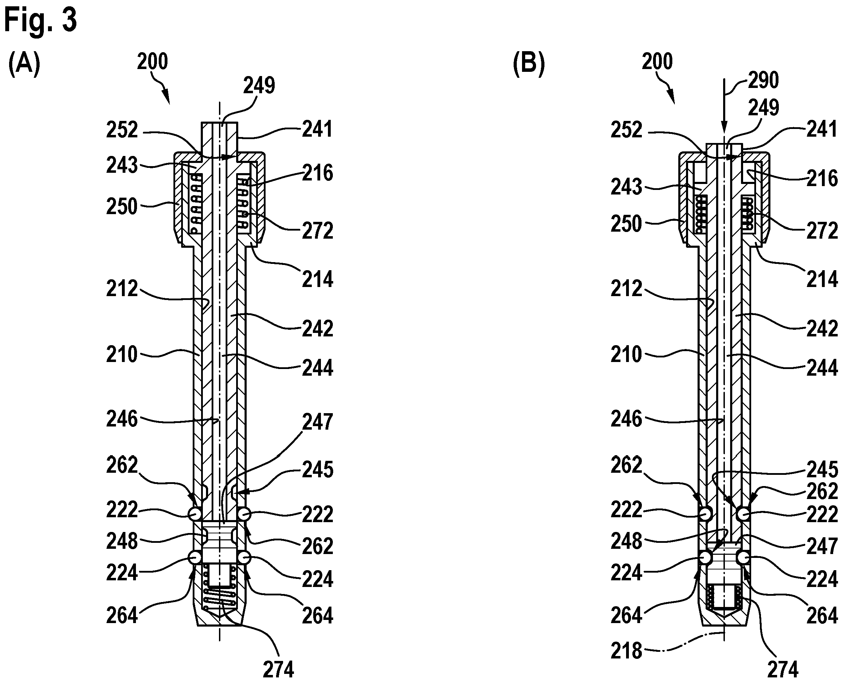

The blocking pin 242 is provided for biasing, in a blocking position, the at least one locking ball 222 into a locking position, and for releasing, in a releasing position, the at least one locking ball 222 such that the at least one locking ball 222 may move into an unlocking position, as described in detail below at Figure 3. Similarly, the additional blocking pin 244 is provided for biasing, in a blocking position, the at least one additional locking ball 224 into a locking position, and for releasing, in a releasing position, the at least one additional locking ball 224 such that the at least one additional locking ball 224 may move into an unlocking position, as described in detail below at Figure 3.

By way of example, the at least one locking ball 222 and, preferably, two or more locking balls 222 form a first locking level 232. A second locking level 234 may be formed by the at least one additional locking ball 224 and, preferably, by two or more additional locking balls 224, as illustrated. The locking balls 222 and the additional locking balls 224 are accommodated in the pin body 210, as described in detail below at Figure 3.

The pin body 210 illustratively further comprises a collar 214. Moreover, a closure cap 250 is preferably mounted to the pin body 210 in the region of the collar 214.

More particularly, part (A) of Figure 2 shows the ball lock pin 200 in an unactuated state. In this unactuated state, the blocking pin 242 and the additional blocking pin 244 are in their respective blocking positions and, thus, the locking balls 222 and the additional locking balls 224 are moved into their respective locking positions.

At this point, it should be noted that the ball lock pin 200 is shown with one blocking pin 242 and one additional blocking pin 244. However, instead of only one additional blocking pin 244, two or more additional blocking pins 244 may likewise be used.

Part (B) of Figure 2 shows the ball lock pin 200 in an actuated state. In this actuated state, the blocking pin 242 and the additional blocking pin 244 were moved into their respective releasing positions and, thus, the locking balls 222 and the additional locking balls 224 may move into their respective unlocking positions.

By way of example, the blocking pin 242 and the additional blocking pin 244 are moved from their blocking positions according to part (A) into their releasing positions according to part (B) by being pushed into the pin body 210. Alternatively, the blocking pin 242 and the additional blocking pin 244 may be moved from their blocking positions into their releasing positions e. g. by being at least partly pushed into the pin body 210.

Part (C) of Figure 2 shows the blocking pin 242 in more detail, which illustratively comprises a collar 243 that delimits an actuatable end section 241. The blocking pin 242 preferably further comprises a ring-shaped notch 245 for reception of the locking balls 222 in their unlocking positions, i.e. in the releasing position of the blocking pin 242, as described in more detail below at Figure 3. The ring-shaped notch 245 and the actuatable end section 241 are preferably arranged on opposed axial ends of the blocking pin 242.

Illustratively, the blocking pin 242 is tube-shaped and, thus, provided with an inner accommodation formed as an inner through hole 246. This inner through hole 246 is preferably provided for accommodation of the additional blocking pin 244.

Part (D) of Figure 2 shows the additional blocking pin 244 which is, by way of example, essentially rod-shaped so as to fit into the inner through hole 246 of the blocking pin 242. Similar to the blocking pin 242, the additional blocking pin 244 comprises an actuatable end section 249 as well as a ring-shaped notch 248, both of which are illustratively arranged on opposed axial ends of the additional blocking pin 244.

The ring-shaped notch 248 is provided for reception of the additional locking balls 224 in their unlocking positions, i.e. in the releasing position of the additional blocking pin 244, as described in more detail below at Figure 3. By way of example, the ring-shaped notch 248 is formed in a collar 247 provided on the additional blocking pin 244.

Figure 3 shows in parts (A) and (B) the ball lock pin 200 of Figure 2 in unactuated and actuated state. As described at Figure 2, the ball lock pin 200 comprises the pin body 210, the locking balls 222, the additional locking balls 224, the blocking pin 242, and the additional blocking pin 244. The blocking pin 242 comprises the actuatable end section 241, the collar 243, the ring-shaped notch 245, and the inner through hole 246. The additional blocking pin 244 comprises the collar 247, the ring-shaped notch 248, and the actuatable end section 249. Furthermore, the ball lock pin 200 is provided with the closure cap 250 of Figure 2 and the pin body 210 comprises the collar 214.

More specifically, the pin body 210 comprises at least one locking ball accommodation 262. Preferably, two or more locking ball accommodations 262 are provided for accommodation of the locking balls 222. Likewise, the pin body 210 comprises at least one additional locking ball accommodation 264. Preferably, two or more additional locking ball accommodations 264 are provided for accommodation of the additional locking balls 224.

Furthermore, the pin body 210 comprises an inner accommodation 212. The blocking pin 242 and the additional blocking pin 244 are at least partly arranged in the inner accommodation 212 and movable between their respective blocking positions and their respective releasing positions, as described at Figure 2. Thereby, the additional blocking pin 244 is preferably arranged in the inner through hole 246 of the blocking pin 242 such that the collar 247 of the additional blocking pin 244 abuts against the blocking pin 242 so that the actuatable end sections 241, 249 are positioned coaxially with respect to each other.

Moreover, a primary spring element 272 is arranged in the inner accommodation 212 of the pin body 210 and biases the blocking pin 242 into the blocking position. Similarly, a redundant spring element 274 is arranged in the inner accommodation 212 and biases the additional blocking pin 244 into the blocking position.

Illustratively, the pin body 210 has a closed end that delimits the inner accommodation 212 and supports the redundant spring element 274. Furthermore, the inner accommodation 212 extends at the collar 214 into an enlarged cup-shaped end section 216 and the primary spring element 272 is preferably arranged in the enlarged cup-shaped end section 216, in particular between the blocking pin 242 and the enlarged cup-shaped end section 216.

By way of example, the primary spring element 272 biases the collar 243 in the blocking position of the blocking pin 242 against the closure cap 250. For instance, the closure cap 250 may comprise an opening 252 and the actuatable end section 241 of the blocking pin 242 may at least partly extend through the opening 252. Thus, the actuatable end section 249 of the additional blocking pin 244 may extend together with the actuatable end section 241 of the blocking pin 242 at least partly through the opening 252.

Furthermore, the redundant spring element 274 illustratively abuts against the additional blocking pin 244 close to the notch 248 and, more particularly, against the collar 247. Thus, the redundant spring element 274 biases the collar 247 against the blocking pin 242 and, therefore, also biases the collar 243 of the blocking pin 242 in the blocking position of the blocking pin 242 against the closure cap 250.

More particularly, part (A) of Figure 3 shows the ball lock pin 200 in the unactuated state. In this unactuated state, the blocking pin 242 and the additional blocking pin 244 are biased by the primary spring element 272 and the redundant spring element 274 into their respective blocking positions and, thus, the locking balls 222 and the additional locking balls 224 are biased by the blocking pin 242 and the additional blocking pin 244 into their respective locking positions.

Part (B) of Figure 3, in turn, shows the ball lock pin 200 in the actuated state. Actuation of the ball lock pin 200 is preferably achieved by pushing the blocking pin 242 and the additional blocking pin 244 in an actuation direction illustrated with an arrow 290 along a length axis 218 of the pin body 210 and, more generally, of the ball lock pin 200.

In the actuated state, the blocking pin 242 and the additional blocking pin 244 were moved against the spring forces of the primary spring element 272 and the redundant spring element 274 along the length axis 218 from their respective blocking positions into their respective releasing positions and, thus, the locking balls 222 and the additional locking balls 224 may move into their respective unlocking positions in the ring-shaped notches 245, 248. More specifically, the collar 243 of the blocking pin 242 acts to compress the primary spring element 272 and the collar 247 of the additional blocking pin 244 acts to compress the redundant spring element 274.

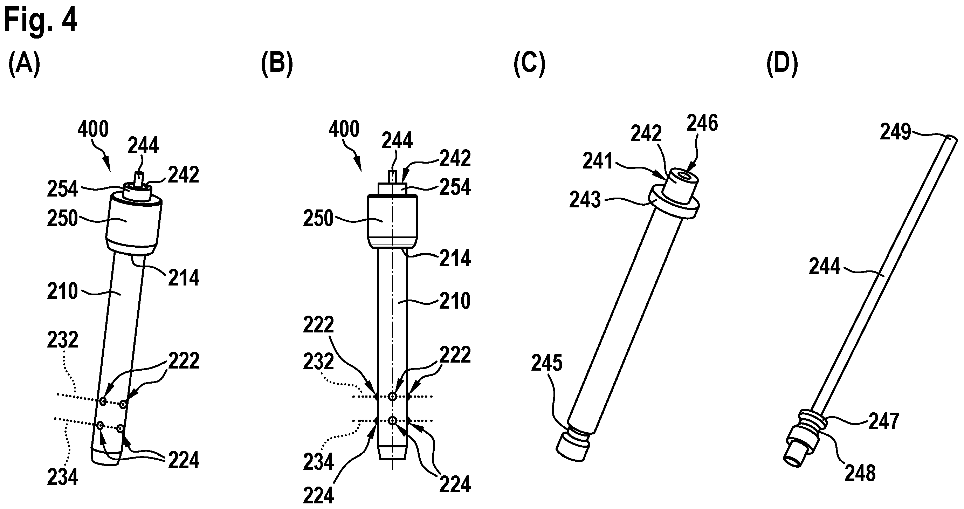

Figure 4 shows in parts (A) to (D) a ball lock pin 400 and components thereof according to a second embodiment. Similar to the ball lock pin 200 of Figure 2 and Figure 3, the ball lock pin 400 comprises the pin body 210, the blocking pin 242, the additional blocking pin 244, the locking balls 222, and the additional locking balls 224. Furthermore, similar to the ball lock pin 200 of Figure 2 and Figure 3, the blocking pin 242 comprises the actuatable end section 241, the collar 243, the ring-shaped notch 245, and the inner through hole 246, and the additional blocking pin 244 comprises the collar 247, the ring-shaped notch 248, and the actuatable end section 249. Moreover, similar to the ball lock pin 200 of Figure 2 and Figure 3, the ball lock pin 400 is provided with the closure cap 250 and the pin body 210 comprises the collar 214.

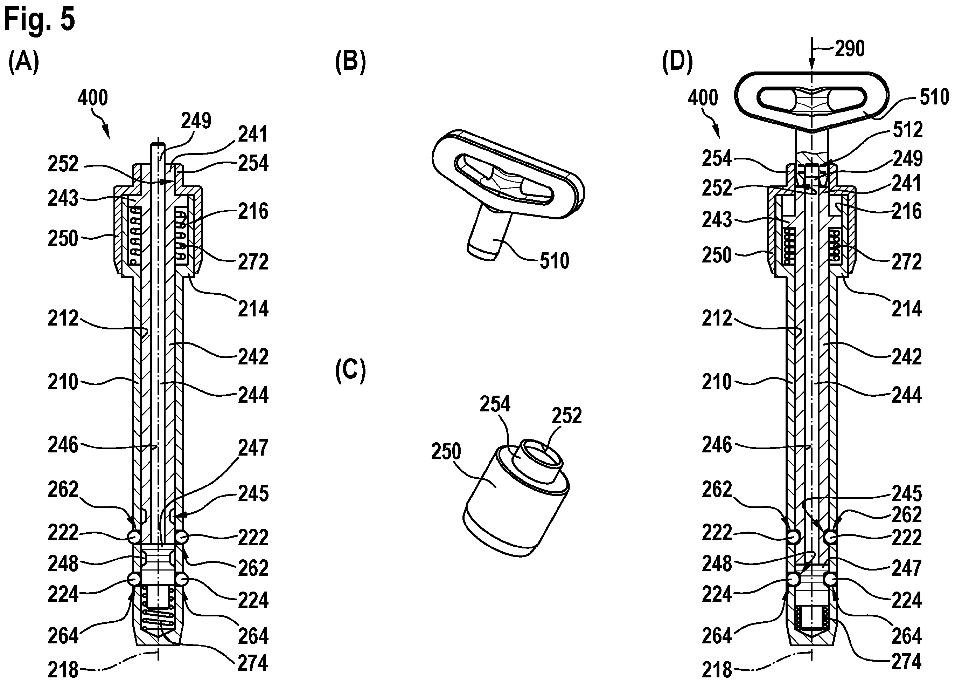

However, in contrast to the ball lock pin 200 of Figure 2 and Figure 3, the additional blocking pin 244 is now extended and the closure cap 250 is now provided with an extension 254. Thus, the ball lock pin 400 is configured to require a specific actuation tool (510 in Figure 5 (B)) for actuation, as described hereinafter at Figure 5.

Figure 5 shows in parts (A) to (D) the ball lock pin 400 of Figure 4 in unactuated and actuated state, as well as components thereof. As described at Figure 4, the ball lock pin 400 comprises the pin body 210, the blocking pin 242, the extended additional blocking pin 244, the locking balls 222, and the additional locking balls 224. The blocking pin 242 comprises the actuatable end section 241, the collar 243, the ring-shaped notch 245, and the inner through hole 246, and the additional blocking pin 244 comprises the collar 247, the ring-shaped notch 248, and the actuatable end section 249. Moreover, the ball lock pin 400 is provided with the closure cap 250 that comprises the extension 254. Furthermore, similar to the ball lock pin 200 of Figure 2 and Figure 3, the ball lock pin 400 is provided with the primary spring element 272 and the redundant spring element 274, and the pin body 210 comprises the collar 214, the enlarged cup-shaped end section 216, the locking ball accommodations 262 as well as the additional locking ball accommodations 264.

More specifically, part (A) of Figure 5 shows the ball lock pin 400 with the length axis 218 in the unactuated state. In this unactuated state, the blocking pin 242 and the extended additional blocking pin 244 are biased by the primary spring element 272 and the redundant spring element 274 into their respective blocking positions and, thus, the locking balls 222 and the additional locking balls 224 are biased by the blocking pin 242 and the extended additional blocking pin 244 into their respective locking positions. In their respective blocking positions, the actuatable end section 241 of the blocking pin 242 is encompassed in radial direction by the extension 254 of the closure cap 250 and the actuatable end section 249 of the extended additional blocking pin 244 extends in direction of the length axis 218 beyond the actuatable end section 241 of the blocking pin 242.

Part (B) of Figure 5 shows an actuation tool 510 associated with the ball lock pin 400. The actuation tool 510 is preferably configured for simultaneous actuation of the blocking pin 242 and the extended additional blocking pin 244, as described below at part (D) of Figure 5.

Part (C) of Figure 5 shows the closure cap 250 for further illustrating the extension 254 in axial direction. The extension 254 is provided with the opening 252 of the closure cap 250 described above at Figure 3.

Part (D) of Figure 5 shows the ball lock pin 400 in the actuated state. Actuation of the ball lock pin 400 is preferably achieved by pushing the blocking pin 242 and the extended additional blocking pin 244 in the actuation direction illustrated with the arrow 290 along the length axis 218 of the pin body 210 and, more generally, of the ball lock pin 400.

More specifically, actuation of the ball lock pin 400 preferably initially requires positioning of the actuation tool 510 as illustrated on the ball lock pin 400. The actuation tool 510 preferentially comprises an inner geometry, e. g. an inner bore 512 which is suitable to accommodate the part of the actuatable end section 249 of the extended additional blocking pin 244 that extends in direction of the length axis 218 beyond the actuatable end section 241 of the blocking pin 242. Thus, by pushing the actuation tool 510 in the direction of the arrow 290 the blocking pin 242 and the extended additional blocking pin 244 are simultaneously moved against the spring forces of the primary spring element 272 and the redundant spring element 274 along the length axis 218 from their respective blocking positions into their respective releasing positions and, consequently, the locking balls 222 and the additional locking balls 224 may move into their respective unlocking positions in the ring-shaped notches 245, 248. Thereby, the collar 243 of the blocking pin 242 acts to compress the primary spring element 272 and the collar 247 of the extended additional blocking pin 244 acts to compress the redundant spring element 274.

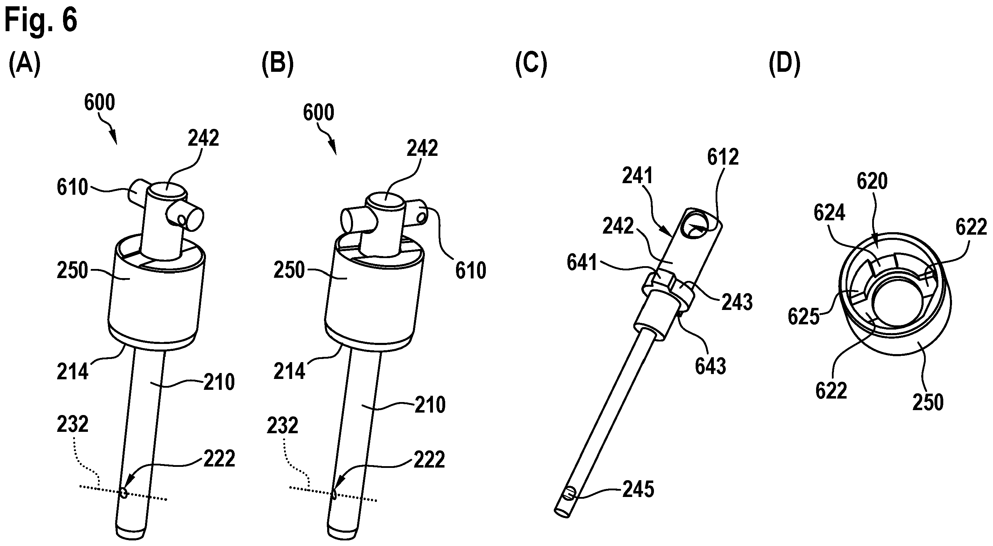

Figure 6 shows in parts (A) to (D) a ball lock pin 600 and components thereof according to a third embodiment. Similar to the ball lock pin 200 of Figure 2 and Figure 3, the ball lock pin 600 comprises the pin body 210, the blocking pin 242, and the locking balls 222. Furthermore, similar to the ball lock pin 200 of Figure 2 and Figure 3, the pin body 210 comprises the collar 214 and the blocking pin 242 comprises the actuatable end section 241, the collar 243, and the notch 245. Moreover, similar to the ball lock pin 200 of Figure 2 and Figure 3, the ball lock pin 400 is provided with the closure cap 250.

However, in contrast to the ball lock pin 200 of Figure 2 and Figure 3, the ball lock pin 600 does not comprise the additional blocking pin 244 and the additional locking balls 224. Instead, as illustrated in part (C) of Figure 6 the blocking pin 242 is now preferably provided with an actuation tool in the form of a transversal rod 610 which is mountable to the actuatable end section 241 of the blocking pin 242, and the notch 245 is now formed by prismatic notches, which are hereinafter commonly referred to as "the prismatic notches 245", for simplicity and brevity.

More specifically, as illustrated in part (C) of Figure 6 the actuatable end section 241 of the blocking pin 242 may be provided with an accommodation e. g. formed by a through hole 612 through which the transversal rod 610 may extend. Furthermore, the collar 243 of the blocking pin 242 may be provided with at least one and, illustratively, two laterally extending flanges 641, 643, which are referred to hereinafter as "the lateral flanges 641, 643", for simplicity and brevity.

Part (D) of Figure 6 shows the closure cap 250 according to the third embodiment of the ball lock pin 600. More specifically, the closure cap 250 may comprise an engaging geometry 620 configured to enable engagement with the lateral flanges 641, 643 of the blocking pin 242. Illustratively, the engaging geometry 620 comprises a predetermined number of recesses 622, 624 formed in a support ring 625 provided in the closure cap 250.

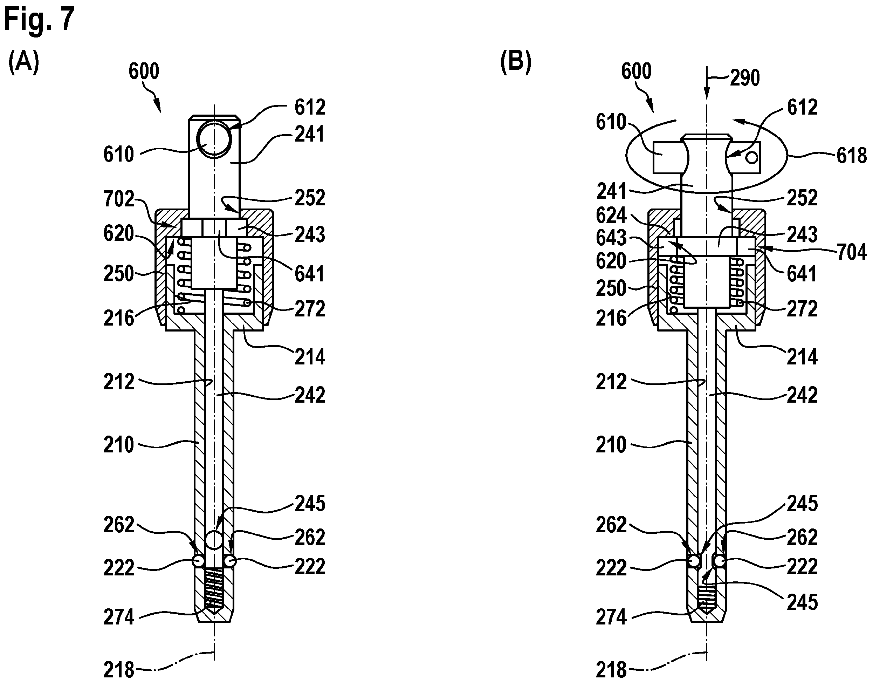

Figure 7 shows in parts (A) and (B) the ball lock pin 600 of Figure 6 in the unactuated and the actuated state, respectively. As described at Figure 6, the ball lock pin 600 comprises the pin body 210, the blocking pin 242, and the locking balls 222. The blocking pin 242 is equipped with the transversal rod 610 and comprises the actuatable end section 241, the collar 243 that comprises the lateral flanges 641, 643, and the prismatic notches 245. Moreover, the ball lock pin 600 is provided with the closure cap 250 that comprises the engaging geometry 620. Furthermore, similar to the ball lock pin 200 of Figure 2 and Figure 3, the ball lock pin 600 is provided with the primary spring element 272 and the redundant spring element 274, and the pin body 210 comprises the locking ball accommodations 262 and the enlarged cup-shaped end section 216.

More specifically, part (A) of Figure 7 shows the ball lock pin 600 with the length axis 218 in the unactuated state. In this unactuated state, the blocking pin 242 is biased by the primary spring element 272 and the redundant spring element 274 into the blocking position and, thus, the locking balls 222 are biased by the blocking pin 242 into their locking positions. In the blocking position, the lateral flange 641, and also the lateral flange 643 of Figure 6, preferably engage the engaging geometry 620, i.e. they are positioned in the recesses 622 of Figure 6. Thus, the lateral flange 641, and also the lateral flange 643 of Figure 6, is illustratively locked in a first angular position 702.

Part (B) of Figure 7 shows the ball lock pin 600 in the actuated state. Actuation of the ball lock pin 600 is preferably achieved by initially pushing the blocking pin 242 in the actuation direction illustrated with the arrow 290 along the length axis 218 of the pin body 210 and, more generally, of the ball lock pin 600. Thus, the blocking pin 242 is moved against the spring forces of the primary spring element 272 and the redundant spring element 274 along the length axis 218, whereby the collar 243 of the blocking pin 242 acts to compress the primary spring element 272 and whereby the blocking pin 242 as such further acts to compress also the redundant spring element 274, as the redundant spring element 274 now preferably abuts against the blocking pin 242 close to the prismatic notches 245. Then, the blocking pin 242 may be rotated about the length axis 218 toward a second angular position 704, in which the lateral flanges 641, 643 preferably re-engage the engaging geometry 620, i.e. they are positioned in the recesses 624 of Figure 6. Thus, the blocking pin 242 may be locked in the second angular position 704, which corresponds to its releasing position, such that the locking balls 222 may move into the unlocking positions in the prismatic notches 245.

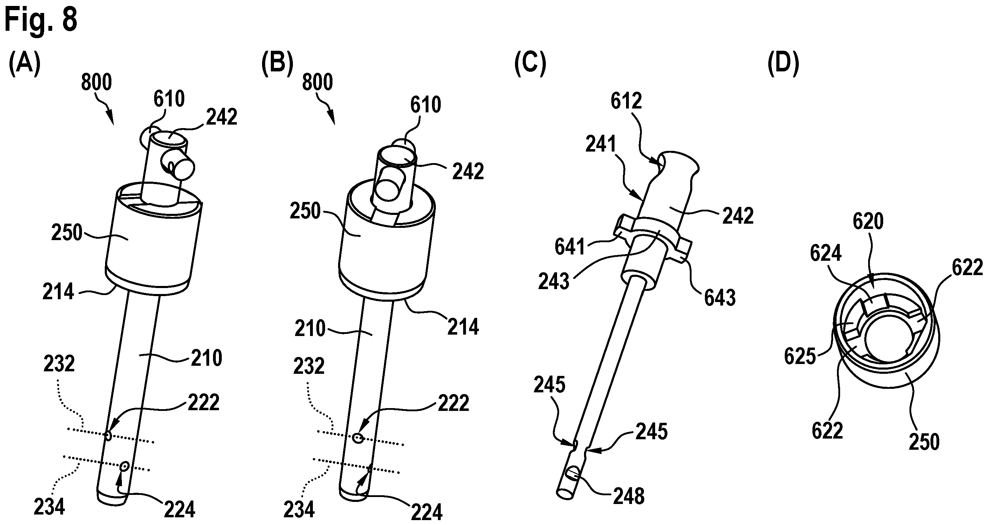

Figure 8 shows in parts (A) to (D) a ball lock pin 800 and components thereof according to a fourth embodiment. Similar to the ball lock pin 600 of Figure 6 and Figure 7, the ball lock pin 800 comprises the pin body 210, the blocking pin 242, and the locking balls 222. Furthermore, similar to the ball lock pin 600 of Figure 6 and Figure 7, the pin body 210 comprises the collar 214, and the blocking pin 242 is equipped with the transversal rod 610 extending through the through hole 612 and comprises the actuatable end section 241, the collar 243 having the lateral flanges 641, 643, and the prismatic notches 245. Moreover, similar to the ball lock pin 600 of Figure 6 and Figure 7, the ball lock pin 800 is provided with the closure cap 250 that comprises the engaging geometry 620 with the recesses 622, 624 formed in the support ring 625.

However, in contrast to the ball lock pin 600 of Figure 6 and Figure 7, the ball lock pin 800 now comprises the additional locking balls 224 according to Figure 2 and Figure 3, such that the locking balls 222 and the additional locking balls 224 form again the separate locking levels 232, 234, respectively, as described above at Figure 2. Therefore, as illustrated in part (C) of Figure 6 the blocking pin 242 is now also provided with the notch 248 according to Figure 2 and Figure 3 which is, however, formed by prismatic notches that are hereinafter commonly referred to as "the prismatic notches 248", for simplicity and brevity.

By way of example, in part (C) of Figure 8 the prismatic notches 245 and the prismatic notches 248 are illustrated with an angular offset of 90°. However, such an angular offset is not mandatory and may, instead, amount to an arbitrary value between 0° and 360°.

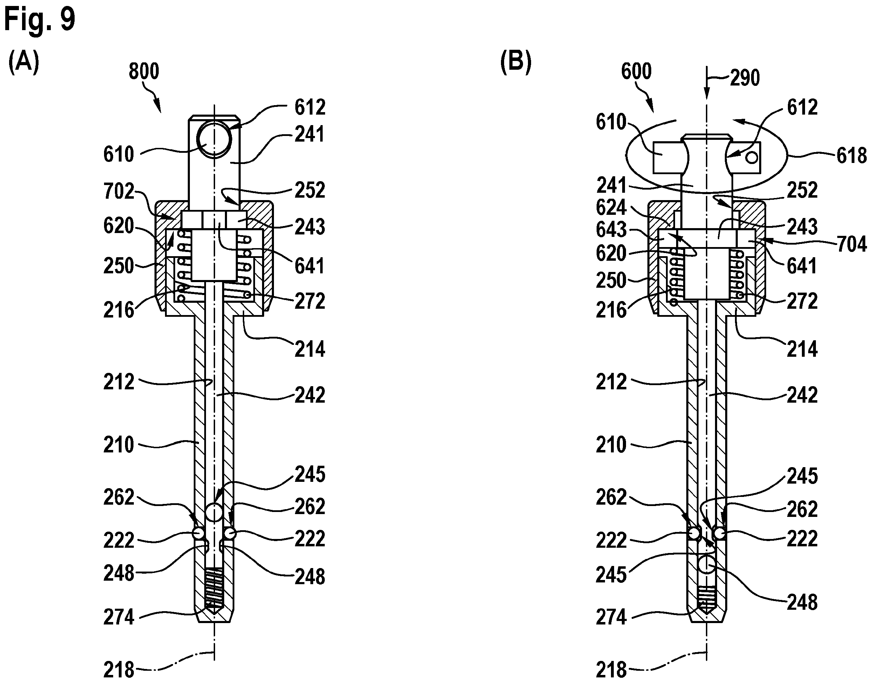

Figure 9 shows in parts (A) and (B) the ball lock pin 800 of Figure 8 in the unactuated and the actuated state, respectively. As described at Figure 8, the ball lock pin 800 comprises the pin body 210, the blocking pin 242, the locking balls 222, and the additional locking balls 224 which are, however, not visible in Figure 9. The blocking pin 242 is equipped with the transversal rod 610 and comprises the actuatable end section 241, the collar 243 that comprises the lateral flange 641, 643, and the prismatic notches 245, 248. Moreover, the ball lock pin 800 is provided with the closure cap 250 that comprises the engaging geometry 620. Furthermore, similar to the ball lock pin 600 of Figure 6 and Figure 7, the ball lock pin 800 is provided with the primary spring element 272 and the redundant spring element 274, and the pin body 210 comprises the locking ball accommodations 262, the additional locking ball accommodations 264 which are, however, not visible in Figure 9, and the enlarged cup-shaped end section 216.

More specifically, part (A) of Figure 9 shows the ball lock pin 800 with the length axis 218 in the unactuated state. In this unactuated state, the blocking pin 242 is biased by the primary spring element 272 and the redundant spring element 274 into the blocking position and, thus, the locking balls 222 and the additional locking balls 224 are biased by the blocking pin 242 into their respective locking positions. In the blocking position, the lateral flange 641, and also the lateral flange 643 of Figure 8, preferably engage the engaging geometry 620, i.e. they are positioned in the recesses 622 of Figure 8. Thus, the lateral flange 641, and also the lateral flange 643 of Figure 8, is illustratively locked in the first angular position 702 according to Figure 7.

Part (B) of Figure 9 shows the ball lock pin 800 in the actuated state. Actuation of the ball lock pin 800 is preferably achieved by initially pushing the blocking pin 242 in the actuation direction illustrated with the arrow 290 along the length axis 218 of the pin body 210 and, more generally, of the ball lock pin 800. Thus, the blocking pin 242 is moved against the spring forces of the primary spring element 272 and the redundant spring element 274 along the length axis 218, whereby the collar 243 of the blocking pin 242 acts to compress the primary spring element 272 and whereby the blocking pin 242 as such further acts to compress also the redundant spring element 274, as the redundant spring element 274 now preferably abuts against the blocking pin 242 close to the prismatic notches 248. Then, the blocking pin 242 may be rotated about the length axis 218 toward a second angular position 704 according to Figure 7, in which the lateral flanges 641, 643 preferably re-engage the engaging geometry 620, i.e. they may be positioned in the recesses 624 of Figure 8. Thus, the blocking pin 242 may be locked in the second angular position 704, which corresponds to its releasing position such that the locking balls 222 and the additional locking balls 224 may move into the unlocking positions in the prismatic notches 245, 248, respectively.

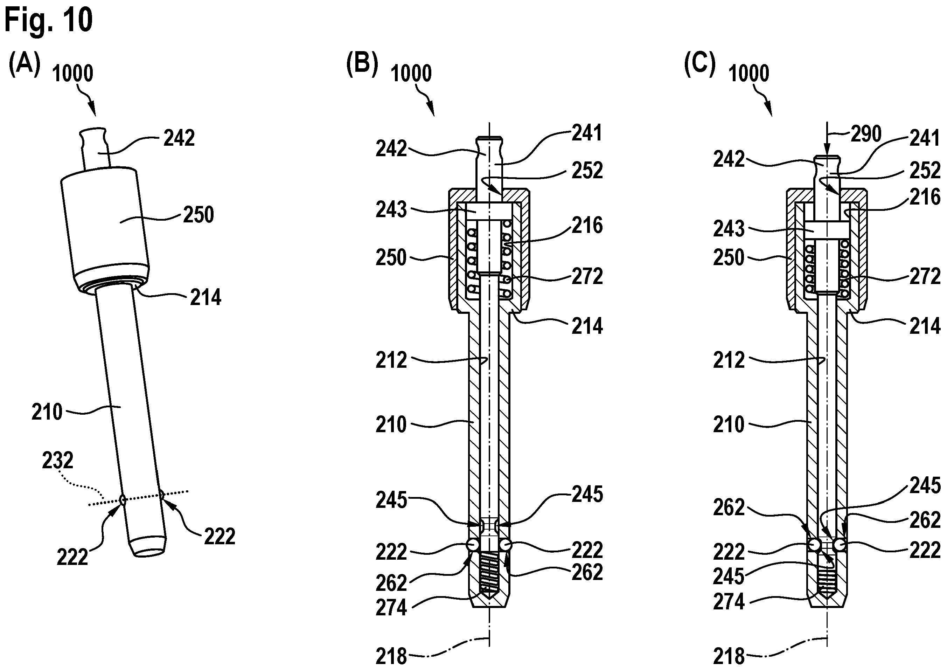

Figure 10 shows in parts (A) to (C) a ball lock pin 1000 according to a fifth embodiment. Similar to the ball lock pin 200 of Figure 2 and Figure 3, the ball lock pin 1000 comprises the pin body 210, the blocking pin 242, and the locking balls 222. As described above at Figure 2 and Figure 3, the blocking pin 242 comprises the actuatable end section 241, the collar 243, and the notch 245. However, in contrast to the ball lock pin 200 of Figure 2 and Figure 3, the ball lock pin 1000 does not comprise the additional blocking pin 244 and the additional locking balls 224.

Moreover, similar to the ball lock pin 200 of Figure 2 and Figure 3, the ball lock pin 1000 is provided with the closure cap 250, the primary spring element 272, and the redundant spring element 274. Furthermore, as described above at Figure 2 and Figure 3, the pin body 210 comprises the collar 214, the enlarged cup-shaped end section 216, and the locking ball accommodations 262.

More specifically, part (A) and part (B) of Figure 10 show the ball lock pin 1000 in the unactuated state. In this unactuated state, the blocking pin 242 is biased by the primary spring element 272 and the redundant spring element 274 into the blocking position and, thus, the locking balls 222 are biased by the blocking pin 242 into their locking positions.

Part (C) of Figure 10 shows the ball lock pin 1000 with the length axis 218 in the actuated state. Actuation of the ball lock pin 1000 is preferably achieved similar to Figure 3 by pushing the blocking pin 242 in the actuation direction illustrated with the arrow 290 along the length axis 218 of the pin body 210 and, more generally, of the ball lock pin 1000. Thus, the blocking pin 242 is moved against the spring forces of the primary spring element 272 and the redundant spring element 274 along the length axis 218, whereby the collar 243 of the blocking pin 242 acts to compress the primary spring element 272 and whereby the blocking pin 242 as such further acts to compress also the redundant spring element 274, as the redundant spring element 274 now preferably abuts against the blocking pin 242 close to the notch 245. Thus, the locking balls 222 may move into the unlocking positions in the notch 245.

Figure 11 shows one of the hinges 190 of Figure 1 for further illustrating use of the ball lock pins of Figure 2 to Figure 10. For simplicity and brevity, the one of the hinges 190 is hereinafter only referred to as "the hinge 190".

Illustratively, the hinge 190 comprises three knuckles 1110, 1120, 1130 with leaves 1112, 1122, 1132. For instance, the leaves 1112, 1122 may be mounted to the engine cowling 180 of Figure 1 and the leaf 1132 may be mounted to the engine cowling access door 185 of Figure 1.

By way of example, the ball lock pin 200 with the locking balls 222 and the additional locking balls 224 according to Figure 2 and Figure 3 is mounted to the knuckles 1110, 1120, 1130. The locking balls 222 and the additional locking balls 224 are in their respective locking positions such that the knuckles 1110, 1120, 1130 are fixedly interconnected, so that the leaf 1132 may preferably be rotated relative to the leaves 1112, 1122.

Figure 12 shows the hinge 190 of Figure 11 during insertion of the ball lock pin 200 into the knuckles 1110, 1120, 1130. The knuckle 1130 comprises the leaf 1132.

More specifically, the knuckles 1110, 1120, 1130 are initially aligned in order to allow insertion of the ball lock pin 200 thereinto. The ball lock pin 200 is then actuated to be in the actuated state according to Figure 3, part (B), such that the locking balls 222 and the additional locking balls 224 may move into their respective unlocking positions during insertion of the ball lock pin 200 into the knuckles 1110, 1120, 1130. Thus, the ball lock pin 200 may be inserted into the knuckles 1110, 1120, 1130, illustratively by pushing the ball lock pin 200 in an insertion direction 1210 into the knuckles 1110, 1120, 1130.

Figure 13 shows the hinge 190 of Figure 11 and Figure 12 after insertion of the ball lock pin 200 into the knuckles 1110, 1120, 1130. More specifically, after insertion of the ball lock pin 200 into the knuckles 1110, 1120, 1130, the ball lock pin 200 may be released and, thus, transition into the unactuated state according to Figure 3, part (A). As described above at Figure 3, part (A), in the unactuated state the blocking pin 242 and the additional blocking pin 244 are biased by the primary spring element 272 and the redundant spring element 274 into their respective blocking positions and, thus, the locking balls 222 and the additional locking balls 224 are biased by the blocking pin 242 and the additional blocking pin 244 into their respective locking positions. Biasing of the primary spring element 272 and the redundant spring element 274 is further illustrated with an arrow 1310, and biasing of the locking balls 222 and the additional locking balls 224 is further illustrated with arrows 1320.

It should be noted that modifications to the above described embodiments are within the common knowledge of the person skilled in the art and, thus, as long as they fall within the wording of the appended claims, also considered as being part of the present invention. For instance, as described above at Figure 2, the blocking pin 242 and the additional blocking pin 244 are preferably moved from their blocking positions into their releasing positions by being pushed into the pin body 210. However, the blocking pin 242 and the additional blocking pin 244 may alternatively be moved from their blocking positions into their releasing positions e. g. by being at least partly pulled out of the pin body 210, and so on.

Furthermore, in Figure 11 to Figure 13 the hinge 190 is only by way of example shown with the ball lock pin 200 of Figure 2 and Figure 3. However, it is clear to the person skilled in the art that any other one of the ball lock pins 400, 600, 800, and 1000 of Figure 4 to Figure 10 may likewise be used.

### Reference List

100 helicopter
110 multi-blade rotor system
111 engine
112, 113 rotor blades
114 rotor head
115 rotor shaft
120 fuselage
123 cabin
127 rear fuselage
130 tail boom
135 horizontal stabilizer
140 counter-torque device
145 tail rotor
150 fin
160 cowling
170 transmission cowling
175 crest cowling
180 engine cowling
185 engine cowling access door
190 cowling access door hinges
200 ball lock pin
210 pin body
212 inner accommodation
214 pin body collar
216 cup-shaped end section
218 length axis
222, 224 locking balls
232, 234 locking levels
241, 249 actuatable end sections
242, 244 blocking pins
243 collar
245 notch
246 inner through hole
247 collar
248 notch
250 closure cap
252 closure cap opening
254 closure cap extension
262, 264 locking ball accommodations
272 primary spring element
274 redundant spring element
290 actuation direction
400 ball lock pin
510 actuation tool
512 inner bore
600 ball lock pin
610 transversal rod
612 through hole
618 rotation direction
620 engaging geometry
622, 624 recesses
625 support ring
641, 643 lateral flanges
800 ball lock pin
1000 ball lock pin
1110, 1120, 1130 knuckles
1112, 1122, 1132 leaves
1210 insertion direction
1310 spring element biasing direction
1320 blocking pin biasing directions

## Claims

1. A ball lock pin (1000) comprising:
a pin body (210) with a length axis (218), an inner accommodation (212), and at least one locking ball accommodation (262);
a blocking pin (242) that is at least partly arranged in the inner accommodation (212) and movable along the length axis (218) between a blocking position and a releasing position;
at least one locking ball (222) that is movably arranged in the at least one locking ball accommodation (262), wherein the at least one locking ball (222) is biased into a locking position by the blocking pin (242) if the blocking pin (242) is in the blocking position, and wherein the at least one locking ball (222) is released for moving into an unlocking position if the blocking pin (242) is in the releasing position;
a primary spring element (272) that is arranged in the inner accommodation (212) and biases the blocking pin (242) into the blocking position; and **characterized in that** it further comprises
a redundant spring element (274) that is arranged in the inner accommodation (212) and biases the blocking pin (242) into the blocking position.

2. The ball lock pin (1000) of claim 1, wherein the pin body (210) comprises an enlarged cup-shaped end section (216), and wherein the primary spring element (272) is arranged in the enlarged cup-shaped end section (216), in particular between the blocking pin (242) and the enlarged cup-shaped end section (216).

3. The ball lock pin (1000) of claim 2, further comprising a closure cap (250) that closes the enlarged cup-shaped end section (216), wherein the closure cap (250) comprises an opening (252), and wherein the blocking pin (242) comprises an actuatable end section (241) that extends through the opening (252).

4. The ball lock pin (1000) of claim 3, wherein the blocking pin (242) comprises a collar (243) that delimits the actuatable end section (241) on the blocking pin (242), and wherein the primary spring element (272) biases the collar (243) in the blocking position of the blocking pin (242) against the closure cap (250).

5. The ball lock pin (1000) of claim 4, wherein the blocking pin (242) comprises at least one notch (245) for reception of the at least one locking ball (222) in the releasing position of the blocking pin (242), and wherein the at least one notch (245) and the collar (243) are arranged on opposed axial ends of the blocking pin (242).

6. The ball lock pin (1000) of any one of the preceding claims, wherein the redundant spring element (274) abuts against the blocking pin (242) close to the at least one notch (245).

7. The ball lock pin (200) of any one of the preceding claims, further comprising at least one additional blocking pin (244).

8. The ball lock pin (200) of claim 7, wherein the blocking pin (242) is tube-shaped and comprises an inner through hole (246), and wherein the at least one additional blocking pin (244) is at least partly accommodated in the inner through hole (246).

9. The ball lock pin (200) of claim 8, wherein the at least one additional blocking pin (244) comprises a collar (247) that abuts against the blocking pin (242).

10. The ball lock pin (200) of claim 9, wherein the redundant spring element (274) biases the collar (247) of the at least one additional blocking pin (244) against the blocking pin (242).

11. The ball lock pin (200) of claim 10, further comprising at least one additional locking ball (224), wherein the pin body (210) comprises at least one additional locking ball accommodation (264), wherein the at least one additional locking ball (224) is movably arranged in the at least one additional locking ball accommodation (264), wherein the at least one additional locking ball (224) is biased into an associated locking position by the at least one additional blocking pin (244) if the at least one additional blocking pin (244) is in an associated blocking position, wherein the at least one additional locking ball (224) is released for moving into an associated unlocking position if the at least one additional blocking pin (244) is in an associated releasing position, and wherein the at least one locking ball (222) and the at least one additional locking ball (224) form separate locking levels (232, 234).

12. The ball lock pin (400) of any one of claims 7 to 11, wherein the blocking pin (242) and the at least one additional blocking pin (244) are simultaneously actuatable via an associated actuation tool (510).

13. The ball lock pin (600) of any one of the preceding claims, wherein the blocking pin (242) is rotatable about the length axis (218) and comprises at least one lateral flange (641, 643) that is at least lockable in one first angular position (702) or one second angular position (704).

14. The ball lock pin (600) of claim 13, wherein the blocking pin (242) is in the releasing position if the blocking pin (242) is locked in the second angular position (704).

15. An aircraft (100) comprising a ball lock pin (200; 400; 600; 800; 1000) according to any one of the preceding claims.

## Patentansprüche

1. Kugelverriegelungsstift (1000), umfassend: einen Stiftkörper (210) mit einer Längsachse (218), einer inneren Aufnahme (212) und mindestens einer Verriegelungskugelaufnahme (262);
einen Sperrstift (242), der zumindest teilweise in der inneren Aufnahme (212) angeordnet und entlang der Längsachse (218) zwischen einer Sperrstellung und einer Freigabestellung bewegbar ist;
mindestens eine Verriegelungskugel (222), die in der mindestens einen Verriegelungskugelaufnahme (262) beweglich angeordnet ist, wobei die mindestens eine Verriegelungskugel (222) durch den Sperrstift (242) in eine Verriegelungsstellung vorgespannt ist, wenn sich der Sperrstift (242) in der Sperrstellung befindet, und wobei die mindestens eine Verriegelungskugel (222) zur Bewegung in eine Entriegelungsstellung freigegeben ist, wenn sich der Sperrstift (242) in der Freigabestellung befindet;
ein primäres Federelement (272), das in der inneren Aufnahme (212) angeordnet ist und den Sperrstift (242) in die Sperrstellung vorspannt; und **dadurch gekennzeichnet, dass** er ferner ein redundantes Federelement (274) umfasst, das in der inneren Aufnahme (212) angeordnet ist und den Sperrstift (242) in die Sperrstellung vorspannt.

2. Kugelverriegelungsstift (1000) nach Anspruch 1, bei dem der Stiftkörper (210) einen vergrößerten becherförmigen Endabschnitt (216) umfasst und bei dem das primäre Federelement (272) in dem vergrößerten becherförmigen Endabschnitt (216), insbesondere zwischen dem Sperrstift (242) und dem vergrößerten becherförmigen Endabschnitt (216), angeordnet ist.

3. Kugelverriegelungsstift (1000) nach Anspruch 2, ferner umfassend eine Verschlusskappe (250), die den vergrößerten becherförmigen Endabschnitt (216) verschließt, wobei die Verschlusskappe (250) eine Öffnung (252) umfasst und wobei der Sperrstift (242) einen betätigbaren Endabschnitt (241) umfasst, der sich durch die Öffnung (252) erstreckt.

4. Kugelverriegelungsstift (1000) nach Anspruch 3, bei dem der Sperrstift (242) einen Kragen (243) umfasst, der den betätigbaren Endabschnitt (241) am Sperrstift (242) begrenzt, und wobei das primäre Federelement (272) in der Sperrstellung des Sperrstifts (242) den Kragen (243) gegen die Verschlusskappe (250) vorspannt.

5. Kugelverriegelungsstift (1000) nach Anspruch 4, bei dem der Sperrstift (242) mindestens eine Kerbe (245) zum Aufnehmen der mindestens einen Verriegelungskugel (222) in der Freigabestellung des Sperrstifts (242) umfasst, und bei dem die mindestens eine Kerbe (245) und der Kragen (243) an gegenüberliegenden axialen Enden des Sperrstifts (242) angeordnet sind.

6. Kugelverriegelungsstift (1000) nach einem der vorhergehenden Ansprüche, bei dem das redundante Federelement (274) nahe der mindestens einen Kerbe (245) an dem Sperrstift (242) anliegt.

7. Kugelverriegelungsstift (200) nach einem der vorhergehenden Ansprüche, der ferner mindestens einen zusätzlichen Sperrstift (244) umfasst.

8. Kugelverriegelungsstift (200) nach Anspruch 7, bei dem der Sperrstift (242) rohrförmig ist und ein inneres Durchgangsloch (246) umfasst, und bei dem der mindestens eine zusätzliche Sperrstift (244) zumindest teilweise in dem inneren Durchgangsloch (246) aufgenommen ist.

9. Kugelverriegelungsstift (200) nach Anspruch 8, bei dem der mindestens eine zusätzliche Sperrstift (244) einen Kragen (247) umfasst, der an dem Sperrstift (242) anliegt.

10. Kugelverriegelungsstift (200) nach Anspruch 9, bei dem das redundante Federelement (274) den Kragen (247) des mindestens einen zusätzlichen Sperrstifts (244) gegen den Sperrstift (242) vorspannt.

11. Kugelverriegelungsstift (200) nach Anspruch 10, ferner umfassend mindestens eine zusätzliche Verriegelungskugel (224), wobei der Stiftkörper (210) mindestens eine zusätzliche Verriegelungskugelaufnahme (264) umfasst, wobei die mindestens eine zusätzliche Verriegelungskugel (224) beweglich in der mindestens einen zusätzlichen Verriegelungskugelaufnahme (264) angeordnet ist, wobei die mindestens eine zusätzliche Verriegelungskugel (224) durch den mindestens einen zusätzlichen Sperrstift (244) in eine zugeordnete Sperrstellung vorgespannt ist, wenn sich der mindestens eine zusätzliche Sperrstift (244) in einer zugeordneten Verriegelungsstellung befindet, wobei die mindestens eine zusätzliche Verriegelungskugel (224) zum Bewegen in eine zugeordnete Entriegelungsstellung freigegeben ist, wenn sich der mindestens eine zusätzliche Sperrstift (244) in einer zugehörigen Entriegelungsstellung befindet, und wobei die mindestens eine Verriegelungskugel (222) und die mindestens eine zusätzliche Verriegelungskugel (224) getrennte Verriegelungsebenen (232, 234) bilden.

12. Kugelverriegelungsstift (400) nach einem der Ansprüche 7 bis 11, bei dem der Sperrstift (242) und der mindestens eine zusätzliche Sperrstift (244) über ein zugeordnetes Betätigungswerkzeug (510) gleichzeitig betätigbar sind.

13. Kugelverriegelungsstift (600) nach einem der vorhergehenden Ansprüche, bei dem der Sperrstift (242) um die Längsachse (218) drehbar ist und mindestens einen seitlichen Flansch (641, 643) umfasst, der in mindestens einer ersten Winkelstellung (702) oder einer zweiten Winkelstellung (704) verriegelbar ist.

14. Kugelverriegelungsstift (600) nach Anspruch 13, bei dem sich der Sperrstift (242) in der Freigabestellung befindet, wenn der Sperrstift (242) in der zweiten Winkelstellung (704) verriegelt ist.

15. Luftfahrzeug mit einem Kugelverriegelungsstift (200; 400; 600; 800; 1000) nach einem der vorhergehenden Ansprüche.

## Revendications

1. Goupille (1000) de sûreté à bille comprenant :
un corps (210) de goupille avec un axe (218) longitudinal, un logement (212) intérieur, et au moins un logement (262) de bille de verrouillage ;
une tige (242) de blocage qui est au moins aménagée partiellement dans le logement (212) intérieur et apte à se déplacer le long de l'axe (218) longitudinal entre une position de blocage et une position de libération ;
au moins une bille (222) de verrouillage qui est aménagée de façon déplaçable dans ledit au moins un logement (262) de bille de verrouillage, dans laquelle ladite au moins une bille (222) de verrouillage est déplacée vers une position de verrouillage par la tige (242) de blocage si la tige (242) de blocage est dans la position de blocage, et dans laquelle ladite au moins une bille (222) de verrouillage est libérée pour passer dans une position de déverrouillage si la tige (242) de blocage est dans la position de libération ;
un élément (272) formant ressort principal qui est aménagé dans le logement (212) intérieur et qui déplace la tige (242) de blocage vers la position de blocage ; et **caractérisée en ce qu'**elle comprend en outre un élément (274) formant ressort redondant qui est aménagé dans le logement (212) intérieur et qui déplace la tige (242) de blocage en position de blocage.

2. Goupille (1000) de sûreté à bille selon la revendication 1, dans laquelle le corps (210) de goupille comprend une section (216) d'extrémité élargie en forme de coupe, et dans laquelle l'élément (272) formant ressort principal est aménagé dans la section (216) d'extrémité élargie en forme de coupe, en particulier entre la tige (242) de blocage et la section (216) d'extrémité élargie en forme de coupe.

3. Goupille (1000) de sûreté à bille selon la revendication 2 comprenant en outre un couvercle (250) de fermeture qui ferme la section (216) d'extrémité élargie en forme de coupe, dans laquelle le couvercle (250) de fermeture comprend une ouverture (252), et dans laquelle la tige (242) de blocage comprend une section (241) d'extrémité actionnable qui passe à travers l'ouverture (252).

4. Goupille (1000) de sûreté à bille selon la revendication 3, dans laquelle la tige (242) de blocage comprend un collier (243) qui délimite la section (241) d'extrémité actionnable sur la tige (242) de blocage, et dans laquelle l'élément (272) formant ressort principal déplace le collier (243) dans la position de blocage de la tige (242) de blocage contre le couvercle (250) de fermeture.

5. Goupille (1000) de sûreté à bille selon la revendication 4, dans laquelle la tige (242) de blocage comprend au moins une encoche (245) pour recevoir ladite au moins une bille (222) de verrouillage dans la position de libération de la tige (242) de blocage, et dans laquelle ladite au moins une encoche (245) et le collier (243) sont aménagés sur des extrémités axiales opposées de la tige (242) de blocage.

6. Goupille (1000) de sûreté à bille selon l'une quelconque des revendications précédentes, dans laquelle l'élément (274) formant ressort redondant vient en butée contre la tige (242) de blocage à proximité de ladite au moins une encoche (245).

7. Goupille (200) de sûreté à bille selon l'une quelconque des revendications précédentes comprenant en outre au moins une tige (244) de blocage supplémentaire.

8. Goupille (200) de sûreté à bille selon la revendication 7, dans laquelle la tige (242) de blocage est de forme tubulaire et comprend un orifice (246) traversant intérieur, et dans laquelle ladite au moins une tige (244) de blocage supplémentaire est au moins partiellement logée dans l'orifice (246) traversant intérieur.

9. Goupille (200) de sûreté à bille selon la revendication 8, dans laquelle ladite au moins une tige (244) de blocage supplémentaire comprend un collier (247) qui vient en butée contre la tige (242) de blocage.

10. Goupille (200) de sûreté à bille selon la revendication 9, dans laquelle l'élément (274) formant ressort redondant déplace le collier (247) de ladite au moins une tige (244) de blocage supplémentaire contre la tige (242) de blocage.

11. Goupille (200) de sûreté à bille selon la revendication 10 comprenant en outre au moins une bille (224) de verrouillage supplémentaire, dans laquelle le corps (210) de goupille comprend au moins un logement (264) de bille de verrouillage supplémentaire, dans laquelle ladite au moins une bille (224) de verrouillage supplémentaire est aménagée de façon déplaçable dans ledit au moins un logement (264) de bille de verrouillage supplémentaire, dans laquelle ladite au moins une bille (224) de verrouillage supplémentaire est déplacée dans une position de verrouillage associée par ladite au moins une tige (244) de blocage supplémentaire si ladite au moins une tige (244) de blocage supplémentaire est dans une position de blocage associée, dans laquelle ladite au moins une bille (224) de verrouillage supplémentaire est libérée pour passer dans une position de déverrouillage associée si ladite au moins une tige (244) de blocage supplémentaire est dans une position de libération associée, et dans laquelle ladite au moins une bille (222) de verrouillage et ladite au moins une bille (224) de verrouillage supplémentaire forment des niveaux (232, 234) de verrouillage séparés.

12. Goupille (400) de sûreté à bille selon l'une quelconque des revendications 7 à 11, dans laquelle la tige (242) de blocage et ladite au moins une tige (244) de blocage supplémentaire sont actionnables simultanément via un outil (510) d'actionnement associé.

13. Goupille (600) de sûreté à bille selon l'une quelconque des revendications précédentes, dans laquelle la tige (242) de blocage est apte à pivoter autour de l'axe (218) longitudinal et comprend au moins un épaulement (641, 643) latéral qui est au moins apte à être verrouillé dans une première position (702) angulaire ou une seconde position (704) angulaire.

14. Goupille (600) de sûreté à bille selon la revendication 13, dans laquelle la tige (242) de blocage est dans la position de libération si la tige (242) de blocage est verrouillée dans la seconde position (704) angulaire.

15. Aéronef (100) comprenant une goupille (200, 400, 600, 800, 1000) de sûreté à bille selon l'une quelconque des revendications précédentes.
